# EUROPEAN PATENT SPECIFICATION

(11) **EP 1 778 960 B1**
(45) Date of publication and mention of the grant of the patent: **06.01.2010**
(21) Application number: 05762805.9
(22) Date of filing: 08.07.2005
(51) Int. Cl.: F02D 19/06, F02M 31/16, F02D 41/00, F02M 31/125

(54) **OPERATING INTERNAL COMBUSTION ENGINES WITH PLANT OIL**
BETREIBEN VON VERBRENNUNGSMOTOREN MIT PFLANZENÖL
MOTEURS A COMBUSTION INTERNE FONCTIONNANT GRACE A L'HUILE VEGETALE

(30) Priority: 08.07.2004 GB 0415387; 24.12.2004 GB 0428388
(43) Date of publication of application: 02.05.2007
(73) Proprietor: Regenatec Limited, Oxford OX14 4RX (GB)
(72) Inventor: LAWTON, Michael David, Didcot, Oxon OX11 8NB (GB); ACKRELL, Lee Francis, Didcot, Oxon OX11 7FE (GB)
(74) Representative: Butler, Michael John
(86) International application number: PCT/GB2005/002705
(87) International publication number: WO 2006/005930

(56) References cited:
- DE-A1- 3 929 115
- DE-A1- 4 418 856
- DE-A1- 10 042 698
- DE-A1- 10 060 573
- DE-A1- 10 217 664
- DE-A1- 19 635 220
- PATENT ABSTRACTS OF JAPAN vol. 008, no. 270 (M-344), 11 December 1984 (1984-12-11) -& JP 59 141742 A (NIPPON KOKAN KK), 14 August 1984 (1984-08-14)

## Description

This invention relates to the operation of an internal combustion engine with plant, e.g. vegetable oil as the fuel.

Compression ignition engines are generally known to operate using a fuel such as diesel oil fuel derived from refined crude oil. However, it is known in the art that it is also possible to fuel a compression ignition engine using a fuel derived from a plant oil. In fact, the first compression ignition engine demonstrated by Rudolf Diesel ran on a peanut oil fuel.

An important and relevant difference between plant oil and diesel oil is the relative viscosity of the two fuels at a particular temperature. Specifically, the viscosity of plant oil is much greater than that of diesel fuel. Thus, to match the viscosity of plant oil to that of diesel it is necessary to heat the oil to a temperature greater than 80°C. The relatively high viscosity of the plant fuel oil below this temperature makes the fuel difficult to pump around the fuel system and into the cylinders for combustion.

The viscosity of plant oil at low temperatures also presents problems when the engine is switched off since the engine, and the plant fuel, then begins to cool. In this situation the now viscous plant fuel remains in the fuel delivery system (including the fuel injectors and fuel pump) which can cause problems with restart of the engine. Attempting to restart the engine with fuel components filled with viscous fuel can, at worst, seriously damage the fuel delivery system and in particular the injection pump and injectors.

Prior art systems overcome this problem using a dual-fuel arrangement wherein conventional diesel fuel is used in conjunction with plant oil. In these systems the engine is provided with a first fuel tank containing a conventional diesel fuel and a second tank containing plant oil. The diesel fuel is used to start the vehicle and to flush the engine after use. To reduce the viscosity of the plant oil fuel an electrical heater is used to heat the plant oil. Once the electrical heater is activated, the fuel source can be switched (using a fuel selection valve) from the conventional diesel fuel to the plant oil which, having an elevated temperature, can be pumped into the combustion chambers. The engine then operates using the plant oil in a conventional manner until the engine is switched-off. When the engine is switched off, the fuel system is flushed with diesel fuel to remove any plant oil from the fuel delivery system.

As described above, in some engines (and in particular smaller compression ignition engines) the plant fuel is often elevated in temperature using electrical heaters suitably arranged in or around the fuel supply lines.

Although these dual fuel systems are well known in the art, there are a number of problems with the fuel heating methods. Specifically, with electrical heating, there can often be a time delay between turning on the engine and the fuel being delivered to the fuel pump at a low viscosity. One solution to this problem is to provide large electrical heaters which are arranged around the fuel supply lines which can quickly heat the fuel. However, these large electrical heater(s) then form part of the electrical load on the engine, thus requiring larger electrical generators.

The prior art systems are therefore prone to the problem, in the first few minutes of operation, of plant fuel oil being delivered to the injector pump and injector at a sub-optimal temperature. Thus, relatively cold plant oil can be introduced into the fuel pump and injectors which can cause damage (as a result for example of differential thermal expansion) and/or inefficient combustion within the engine.

There is therefore a need for a dual fuel delivery system which allows a conventional diesel cycle engine to operate using dual fuels and which prevents damage to the fuel delivery components caused by the introduction of a viscous fuel. Furthermore, there is a need for a fuel delivery system which can be conveniently applied to an existing diesel cycle engine without substantial and costly modification , to the engine itself.

DE 10060573 A discloses a fuel system for a compression ignition internal combustion engine which is adapted to use plant oil as the fuel, comprising: a plant oil fuel tank for storing plant oil fuel, a priming fuel tank for storing a priming fuel, an injector pump feeding an injector for a combustion chamber of the internal combustion engine, and means for heating the plant oil fuel after leaving the plant oil fuel tank and before being pumped to the injector; a fuel selection valve, a plant oil fuel feed from the plant oil fuel tank arranged to feed plant oil fuel into a first inlet of the fuel selection valve, a priming fuel feed from the priming fuel tank arranged to feed priming fuel into a second inlet of the fuel selection valve, the fuel selection valve having an outlet which is arranged to selectively supply the plant oil fuel or the priming fuel to an inlet of the injector pump; a re-circulating circuit which is arranged to feed return excess plant oil fuel from a return outlet of the injector pump back to the inlet of the injector pump without passing to the plant oil fuel tank; a fuel heater in the re-circulating circuit through which the plant oil fuel passes; and a sensor in the re-circulating circuit which provides an output indicative of the viscosity of fuel in the re-circulating circuit so as to control operation of the fuel selection valve.

In DE 10060573 A, the priming fuel is not passed around the re-circulating circuit back to the inlet of the injector pump. Instead, excess priming fuel is diverted to the priming fuel tank. The fuel selection valve is arranged in the plant oil re-circulating circuit, between the heater and the inlet of the injector pump. The plant oil fuel feed to the fuel selection valve forms part of the plant oil re-circulating circuit.

Another system for operating a compression ignition engine with diesel and plant oil fuel disclosed in DE 10 042 698 A1.

The present invention is characterised over DE 10060573 A in that the plant oil fuel feed and the priming fuel feed do not form part of the re-circulating circuit; the fuel selection valve outlet is arranged to feed the plant oil fuel or the priming fuel into the re-circulating circuit; and the arrangement is such that the priming fuel is also re-circulated around the re-circulating circuit from the return outlet of the injector pump back to the inlet of the injector pump without passing to the priming fuel tank, through the heater.

Thus, both priming fuel and plant oil fuel, or mixtures thereof, will be re-circulated around the re-circulating circuit and through the heater.

The fuel can be switched or changed over from a priming fuel to a plant fuel in response to an indication of the fuel viscosity in the recirculation loop. Preferably the fuel viscosity is determined by measuring, or determining, the fuel temperature in the recirculation loop. This thereby prevents fuel reaching the injector pump and injectors below the required temperature and viscosity.

The temperature of the fuel within the recirculation loop may be determined using any suitable sensing means disposed in, or on, a recirculation conduit forming part of the the recirculation loop. Alternatively, the temperature sensing means may be disposed in or on the injector pump itself, if it forms part of the recirculation loop. For example, the temperature may be determined by a sensor disposed within, or on, a casing of the injection pump.

Preferably, the sensing means is located proximate an output of the injection pump. However, the sensing means may be disposed at any position in the recirculation loop. If necessary, using a suitable calibration, look-up table or algorithm, the temperatures in other parts of the recirculation loop may be determined or predicted. For example, the sensing means may be disposed half-way along the recirculation loop and may be arranged, in isolation or in combination with a control arrangement, to determine the temperature in the recirculation conduit proximate the injection pump and to provide a suitable output signal. This may for example be determined using an expected temperature gradient along and around the recirculation loop.

The sensing means may be positioned in direct contact with the recirculating fuel, for example having at least part extending into the recirculating conduit. Preferably, the sensing means is not immediately proximate the heating means so as not to produce erroneous readings caused by conduction from the heat exchanger and so forth.

The sensing means itself may be any suitable temperature sensor such as a thermistor for example.

Thus, a minimum temperature of the fuel within the injection pump itself can be determined by measuring the temperature of the fuel leaving the pump and entering the recirculation loop. The temperature of the fuel leaving the injector pump is not only an indication of the minimum temperature of fuel within the pump but also indicates the maximum viscosity of the fuel within the injector pump.

Alternatively, the fuel viscosity may be directly determined using a suitable viscosity sensor (and located in the same positions as a temperature sensing means) and used to control the fuel selection valve.

As discussed above, it is important to control the temperature and viscosity of fuel entering the fuel delivery component to avoid damage (for example caused by differential thermal expansion of components and so forth) to the complex and expensive injector pump and injectors.

Preferably, the temperature sensing means provides an input to a control unit arranged to control the fuel selection valve control unit. The control unit may for example be integral with an engine or fuel delivery control unit or may be controllable by a user in response to direct indications from the temperature and/or viscosity sensing means.

Preferably, the fuel selection valve is arranged to automatically select the plant oil fuel when a signal received from the temperature sensing means indicates a predetermined fuel temperature or viscosity has been reached. The fuel selection valve may for example be arranged to select the plant fuel when a signal is received indicating that a minimum fuel temperature has been reached. The plant fuel may for example be selected only when the temperature of the fuel in the pump reaches, or exceeds, 80 degrees C or whatever temperature is required to ensure that the viscosity of the plant oil fuel in the pump will be sufficiently low to ensure correct, safe operation.

This may be achieved by direct temperature measurement at the pump. Alternatively, and with reference to the arrangement described above wherein the temperature sensor is disposed at a position along the recirculation loop, the plant fuel may be selected when the temperature sensor indicates a temperature (at that location) which, using the expected temperature gradient of the recirculation loop, corresponds to the required temperature at the injection pump, e.g. 80 degrees C.

In one arrangement the temperature sensing means and fuel selection valve may be in the form of an electro-mechanical device arranged to directly control the fuel selection in response to an indication of the fuel temperature.

The first fuel tank is preferably a conventional fuel tank associated with a conventional compression ignition engine. The second, or auxiliary fuel tank, is preferably arranged to hold a quantity of priming fuel to start the compression ignition engine and to flush the fuel delivery system. The first and second fuel tanks may be of comparable volumes but the first tank is more preferably of a larger volume since the second tank is only used on start-up and shut-down of the engine. The second tank may be detachable from the fuel delivery system such that it can be conveniently and separately filled.

The priming, or starting fuel, may be any fuel suitable to start the compression ignition engine. For example, the priming or starting fuel may be conventional diesel. Alternatively, the fuel may be a mineral diesel substitute such as a biodiesel made from transesterified plant oils. The priming or starting fuel may also comprise additives to facilitate combustion, lubrication or to control the fuel viscosity. Similarly, the plant oil fuel may also comprise additives to facilitate combustion, lubrication or to control viscosity.

The fuel heater in the re-circulating circuit may be any suitable means arranged to heat the fuel before being pumped into the injector pump. Because the heater is placed within the re-circulating circuit, the fuel makes multiple passes through the heater. This thereby increases the efficiency of the heater and reduces the size of the heater required to heat the fuel to the required temperature.

Preferably, the heater and re-circulating circuit are disposed within the engine bay, and preferably proximate the engine block, so as to receive radiant heat and thereby increase efficiency still further.

The heater may be an electrically powered heater. Alternatively, the fuel may be heated by passing the fuel through, or proximate to, the engine block itself. Preferably, the heater is in the form of a separate heat exchanger having a primary circuit arranged to form part of the re-circulating circuit and a secondary circuit arranged to receive a heated fluid from the engine. The heated fluid may be received directly from the cooling circuit of the engine. Preferably, the heating fluid is received from the interior heater circuit of the vehicle cabin, thereby avoiding any restriction on heat supply caused by thermostatic valves and so forth arranged in the engine radiator cooling circuit.

A separate heat exchanger allows the heater to be positioned conveniently in an engine bay where space permits. Preferably the heat exchanger is such that it can be fitted to the cooling circuit of an existing engine i.e. a "retro-fit" arrangement.

There may be more than one heating means disposed along the path of the plant oil fuel. For example, a first heating means may be arranged in a fuel supply conduit from the plant oil fuel tank and arranged to pre-heat the fuel to a first temperature. The heater in the re-circulating circuit may be in the form of a heat exchanger as described above and arranged to heat the fuel to the final temperature.

Thus, heat from the engine can be conveniently used to heat the fuel without adding an additional electrical load to the engine's electrical generator. Furthermore, the heat exchanger efficiency can be maximised (and the size of the heat exchanger minimised) as the fuel repeatedly flows through the heat exchanger disposed within the re-circulation loop.

The fuel selection valve may be any suitable controllable valve arranged to direct fuel from either tank into the recirculation loop. The valve is preferably controllable in response to signals from a control unit or from a temperature sensing means as described above. The fuel selection valve may be arranged to 'switch' between two fuels. Preferably however, the valve is capable of selecting a portion of fuel from each fuel tank thereby permitting a fuel combination to be blended. The fuel is preferably blended in response to a control signal received by the valve from a suitable control unit.

Thus, by blending the priming and plant oil fuel the viscosity of the resultant fuel entering the engine can be controlled. Furthermore, this allows the control unit to minimise the amount of diesel fuel used during engine warm up and also provides additional safety in the event that the plant oil fuel temperature drops.

In a conventional compression ignition system, an injector pump feeds fuel to fuel injectors connected to each of the engine cylinders. Not all of the compressed fuel will pass through the injectors and so excess fuel at the injectors is re-circulated to the injector pump via an injector bleed line. Depending on the operating conditions, an exhaust valve at the injector pump passes excess fuel in general back to the fuel tank.

It has been found that problems can arise with a re-circulating system in accordance with the invention, in which excess fuel from the injector pump is passed into a re-circulating circuit, such as fuel delivery problems and engine cut-out.

It has been found that the problems arise from the fact that the bleed off line are frequently not air tight which can result in air bubbles building up within the re-circulating fuel return loop, which eventually causes problems with the fuel delivery and engine cut out. Also, initial commissioning of the system once installed is notoriously difficult with a re-circulating system with combined fuel return loop & bleed off lines.

In accordance with a preferred embodiment of the invention disclosed herein, whilst the return fuel from the injector pump goes through the re-circulating loop, the fuel from the injector bleed off line is passed back to the fuel tank. This avoids or reduces the problem of air bubble build up.

In a practical embodiment, there will normally be more than one injector, in accordance with the number of cylinders in the engine. The system can be installed in static engines, but is particularly intended for motor vehicles such as cars, vans, trucks, buses and so forth. The system will normally be part of a dual fuel system in which diesel fuel is used until the engine has reached an appropriate temperature.

In an embodiment of the invention a supplementary electrically powered heater is operable before the engine has reached an appropriate operating temperature, for heating the plant oil after leaving the fuel tank and before being pumped to the injector, wherein a generator is driven by the engine and supplies electrical power to the supplementary heater; and the system includes a sensor for the output of the generator and the arrangement is such that power is only supplied to the supplementary heater to the extent there is sufficient capacity in the electrical system to provide it.

The system preferably also includes a temperature monitoring system for the engine and / or the plant oil, so that the supplementary heater is operated only when there is sufficient electrical capacity and the plant oil is too cold.

The electrical heater may simply be turned on and off in accordance with the available electrical capacity, or could be operated at variable powers in accordance with that available.

The supplementary heater may be resistive or for example use other heating arrangements such as Peltier effect units. In a further development, the supplementary heater may also be integrated within the injection pump itself.

The inventions described herein extend to vehicles equipped with such fuel systems in accordance with the various aspects of the inventions, to kits for the conversion of systems that operate using diesel fuel (or the like) as the only fuel, and to methods of operating engines incorporating the systems.

A fuel delivery system according to an invention disclosed herein is preferably arranged to select a plant fuel once particular conditions within the recirculation loop have been achieved. In addition, the system is preferably arranged to switch back to the priming fuel e.g. conventional diesel, when the engine is about to be switched off so as to flush the plant oil from the fuel delivery components.

The fuel supply control unit may be arranged to provide a user with an indication that the fuel delivery system has been flushed correctly and that the plant oil has been removed. The indication may for example be by audio or visual means conveniently disposed within the cabin of the vehicle. The control unit may further be arranged to prevent an attempt at re-starting the engine if the flush cycle has not been completed. For example, the control unit may be arranged to immobilise the engine so as to prevent damage to the fuel delivery components should the engine be started.

In a simple arrangement the flush sequence or cycle may be in the form of a timer which controls a flush valve so as to direct fuel to the plant oil tank for a fixed time period. The flush valve is a valve arranged to direct fuel from the recirculation loop directly to the plant oil tank. Thus, by controlling a flush valve in combination with a fuel selection valve only priming fuel enters the recirculation loop. In one arrangement the flush valve and fuel selection valve may be in the form of a single, multiport valve controllable in the manner described above.

In order to ensure that the fuel delivery system has been sufficiently flushed of plant fuel oil the flush times may be adjusted i.e. the period of time over which the priming fuel is fed through the fuel delivery system before engine shut-down. For example, the flush time may be adjusted in response to an indication of engine speed. Thus, if the engine is at idle the flush time can be extended and if the engine is running at a high speed (high r.p.m) the flush time can be reduced accordingly. The flush time can thereby be controlled as a function of the engine speed.

The flush time may be determined as a fixed number of revolutions of the engine or may, alternatively be a function of the number of engine revolutions and the instantaneous engine r.p.m.

The engine speed may be derived using any suitable means. For example, the engine speed may be determined by analysing the electrical noise from the alternator which is coupled to the power supply of the engine, it may be determined acoustically, by vibration sensor (or accelerometer) or by means of a sensor disposed in or on the high pressure injection conduits (or even on or in the injector pump) arranged to translate the high pressure experienced at top-dead-centre to an indication of engine speed. Alternatively the engine speed may be determined directly from the engine management system or control unit.

Alternatively, the flush time may also be controlled in response to an indication of the volume of fuel which have passed through the fuel delivery system. For example, a finite volume of fuel may be required to flush the fuel delivery components and by measuring the volume of fuel used a complete flush cycle can be determined.

In this arrangement the flush time may be based on a signal derived from a single flow sensor mounted in the fuel tank conduit. Alternatively, the flush time may be based on a signal derived from information from two or more flow sensors mounted in various locations within the fuel supply conduits, the recirculation loop and the fuel return lines. The use of multiple flow sensors can increase the accuracy of the determination of fuel volume.

The flush time may also be controlled in response to an indication of the viscosity of the fuel in the recirculation loop, the injector pump or the injectors (or fuel supply lines thereof). Any suitable means may be used to determine the fuel viscosity. In this arrangement the flush time can be accurately controlled and stopped as soon as a safe viscosity of fuel has been reached in the fuel delivery system.

In some situations it may be undesirable to flush the engine in order to preserve the priming fuel supply. For example, this may be the case where the ambient temperature is such that the engine can be safely started with plant oil without a flushing cycle. In this arrangement the user may be provided with an indication of the expected time, under present temperature conditions, until the viscosity of the plant oil fuel has reached a predetermined level.

In a further arrangement the flush cycle may be automatically controlled in response to an indication that the engine will, in due course, be shut-down. For example, the fuel supply control unit (arranged to control the flush cycle) may be arranged to receive an external signal indicating that the engine will be shortly shut-down and that the flush cycle should commence. For example, a vehicle may receive a control signal from a transmitter located at a vehicle depot. Thus, as the vehicle enters the depot the fuel control signal automatically activates the flush cycle. The control signal may be transmitted (and received) using any suitable means. For example the signal may be by means of an RF transmitter and receiver. Alternatively, the signal may be by means of a sensor or sensors indicating that the vehicle is being refuelled e.g. by means of a reed switch disposed within the fuel filling nozzle. Similarly, as the vehicle leaves the depot the control unit may be arranged to switch to plant oil.

An embodiment of the invention will now be described by way of example and with reference to the accompany drawing which is a schematic diagram of a plant oil fuel system according to the invention.

The fuel system 1 comprises a primary fuel tank 2 containing a quantity of plant oil fuel. In the arrangement shown, primary tank 2 is the conventional fuel tank for the vehicle i.e. the tank which would contain diesel fuel in a conventional installation. The fuel system also comprises an auxiliary tank 3 containing a quantity of conventional diesel fuel. The auxiliary tank 3 is generally of a smaller volume than the primary tank 2.

Primary fuel tank 2 is connected via fuel line 4 to a first plant fuel oil filter 5 which filters debris and prevents unwanted matter entering the remainder of the fuel delivery system.

From the fuel filter 5 the fuel passes to a fuel select valve 6 which is arranged to receive a control signal from an engine controller (not shown) and to switch fuel delivery to the remainder of the fuel delivery system either from the plant fuel supply in primary tank 2 or from the diesel fuel supply in auxiliary tank 3. The fuel select valve 6 receives fuel from the auxiliary tank 3 via fuel line 7 which includes an in-line cartridge filter 8 arranged to remove debris from the diesel fuel supply.

On receipt of the control signal the fuel select valve switches the fuel supply from or to the plant fuel source such that the respective tank (2 or 3) is fluidly connected to a T-piece 9.

T-piece 9 comprises a first input port 9a arranged to receive fuel from the fuel selection valve 6, and a second input port 9b arranged to receive fuel from a recirculation loop described below. The T-piece output port 9c communicates fuel received from the input ports to an injector pump 11, through a heat exchanger 10.

A first output 12 from the injector pump 11 is arranged to recirculate fuel, via fuel recirculation conduit 13, to a 3-port recirculation/flush valve 14.

The 3-port recirculation/flush valve 14 is provided with an input port 14a which receives fuel from the recirculation conduit 13 and two output ports. The first output port 15 is arranged to communicate the recirculated fuel back to the T-piece 9 such that the fuel recirculates around and through the heat exchanger 10. The second output port 16 of the 3-port recirculation/flush valve 14 is arranged to communicate fuel from the recirculation conduit 13 to the first fuel tank 2 via fuel conduit 17.

Fuel conduit 17 fluidly connects the 3-port recirculation/flush valve 14 to a first input port 18a of a T-piece 18. T-piece 18 receives a second input through second input port 18b from an injector pump return line 19 which is described below.

The output from output port 18c of T-piece 18 communicates fuel to a first input 20a of a second T-piece 20 which outputs fuel via an output 20b directly into the first fuel tank 2. A second input 20c to T-piece 20 is connected to an injector bleed off line 21 which is described below.

The 3-port recirculation/flush valve 14 is arranged to receive a control signal from the fuel delivery system controller (not shown) which controls the valve such that fuel from the recirculation conduit 13 is either directed back to the heat exchanger 10 or to the first fuel tank 2. The operation of the valve will be described below.

Returning to the heat exchanger 10, the exchanger has a primary circuit connecting the T-piece 9 to the injector pump 11. The secondary circuit of the heat exchanger is provided with inlet port 22 and outlet port 33. In a conventional way, the secondary circuit is arranged to heat the primary circuit of the heat exchanger using heat communicated through the secondary circuit conduits. Heat is received directly from conduits connected to the interior heater of the vehicle which in turn receives heat from the engine which would otherwise be released to atmosphere. Receiving heat from the interior heating has an advantage over receiving heat directly from the radiator because the radiator circuit has a thermostatic valve which does not open until the coolant has reached a particular temperature. This would not therefore allow the recirculation loop to be heated quickly.

The injector pump 11 is, in the arrangement shown, a combined lift pump arranged to circulate fuel around the recirculation circuit, and high pressure pump arranged to pass fuel at high pressure to the engine injectors.

The injector pump 11 is also provided with an integral resistive heater (not shown) to provide supplementary heating before the engine has reached a satisfactory operating temperature as described below. This heater is controlled so that it only operates if the temperature is too cold and to the extent that there is sufficient electrical capacity in the electrical system from the engine.

The first output 12 from the injector pump is the output from the lift pump which circulates fuel around the recirculation loop as described above. A second output 23 from the injector pump is connected to the injector pump return line 19 which, as described above, connects to the input 18b of the T-piece 18. The injector pump return line 19 is arranged to communicate excess fuel and/or air which may leak into the pump (either from the pump housing, connections leading to the pump or from the conduits communicating fuel), safely and directly back to the fuel tank 2. This arrangement prevents air building-up in the recirculation conduit 13 since any air is diverted to the fuel tank 2 on each cycle.

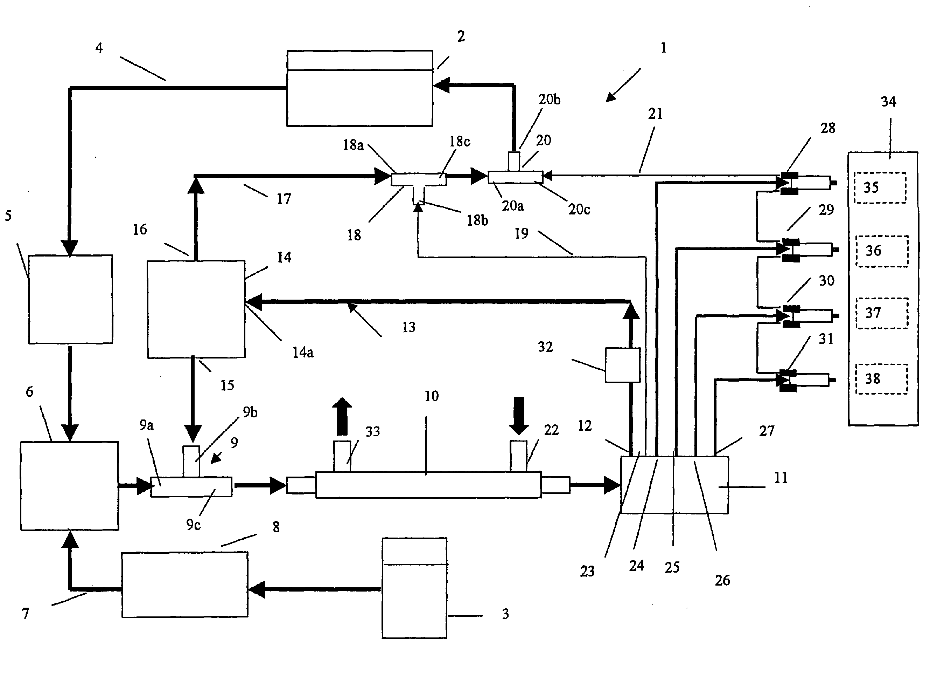

In the arrangement shown in figure 1, an engine 34 has four combustion chambers 35, 36, 37 and 38, with corresponding high pressure fuel injector output lines 24, 25, 26, 27 from the pump 11. Each of the high pressure output lines is connected to the high pressure portion of the injector pump 11 which pressurises the fuel for delivery to the respective injectors 28, 29, 30, 31 via the lines 24, 25, 26 and 27. The injector pump and injectors operate in a conventional way and will not therefore be described in detail.

Each of the injectors 28, 29 ,30, 31 is connected in series to the injector bleed off conduit 21. The injector bleed off conduit is arranged to communicate excess fuel, or air which may leak into the injector or bleed lines, safely and directly back to the fuel tank 2 via the T-piece 20 described above. This prevents any air build-up in this portion of the fuel delivery system which, in conventional systems, is diverted into the recirculation conduit described above.

The fuel delivery control apparatus (not shown) is also connected to a thermistor 32 which is located immediately after the injector pump in the recirculation conduit 33 which is connected to the first output 12 of pump 11. The thermistor 32 is located at least partially within the fuel flow i.e. within the conduit 33, so as to provide an accurate indication of the fuel temperature immediately after leaving the fuel pump.

The individual components and interconnections of the fuel delivery system are described above. In operation the delivery system operates as follows.

In a start up state, the fuel select valve 6 is arranged to direct fuel from the auxiliary fuel tank 3 to the heat exchanger and thence to the injector pump 11. The 3-port recirculation/flush valve 14 is set to direct fuel from the recirculation conduit 13 to the T-piece 9.

At start the fuel in the first tank 2 is at ambient conditions and has a high viscosity. The fuel in the auxiliary tank is, as described above, conventional diesel fuel.

The engine is started in a conventional way and receives diesel fuel from the auxiliary tank 3, through the fuel filter 8 and fuel select valve 6, through the heat exchanger 10 and into the injection pump 11. A portion of the fuel is pressurised in a conventional manner and directed to each of the injectors with the remainder of the fuel being recirculated around the recirculation conduit 13, 3-port recirculation/flush valve 14 and back to the T-piece 9.

In this 'start-up' sequence the engine operates in a conventional way with fuel being delivered to the fuel injectors 28 to 31.

As the engine continues to operate the temperature of the engine coolant will begin to increase. The resultant increase in engine coolant temperature causes a corresponding rise in the heat exchanger secondary circuit temperature (as a result of coolant being circulated from heat exchanger inlet 22 to outlet 33).

The temperature of the fuel in the recirculation conduit is continuously measured by thermistor 32 and signals provided to a fuel delivery control apparatus or unit (not shown).

The temperature in the recirculation loop provides an accurate representation of the temperature of the fuel within the injector pump itself and provides the control unit with a signal indicating a minimum temperature of fuel in the injector. The fuel temperature in the conduit will either be substantially the same as the temperature in the fuel pump or below the temperature in the fuel pump.

The engine continues to operate in a 'start-up' mode in which the fuel select valve 6 and valve 14 are arranged as described above. The engine continues to operate and the engine block temperature and coolant temperature rise. There is a corresponding rise in the heat exchanger primary circuit temperature which in turn heats the fuel passing through the primary circuit which, in this start-up mode, is diesel.

The control unit is pre-programmed with a temperature at which the fuel can be switched over from conventional diesel to plant oil fuel i.e. from the auxiliary tank 3 to the first tank 2. This pre-programmed value is determined as a temperature at which there is sufficient thermal capacity in the heat exchanger 10 to raise the plant fuel oil to a temperature at which the viscosity is sufficiently low to avoid injection pump and/or injector damage. This temperature is typically 80 degrees C.

Thus, the engine continues to operate in a conventional way until the temperature of fuel leaving the fuel pump is at (or above) the pre-programmed temperature as measured by the thermistor 32. This indicates that the recirculation conduit and heat exchanger have reached a state at which the heat exchanger can heat fuel in the primary circuit to above 80 degrees C i.e. above the temperature required to sufficiently reduce the viscosity of the plant oil when the engine is switched over to plant fuel.

It will be appreciated that the temperature within the fuel pump may be higher than the temperature in the conduit as measured at thermistor 32.

Once the pre-programmed temperature is reached the control unit sends a control signal to the fuel selection valve 6 which switches the fuel supply to the recirculation conduit from diesel (in tank 3) to plant oil (in tank 2). Plant fuel then passes from tank 2, via filter 5, to the T-piece 9 and into the heat exchanger 10.

At switch-over the recirculation circuit initially contains only diesel fuel into which the plant oil is now introduced. Thus, as the engine runs and the plant oil is recirculated the ratio of plant oil to diesel oil increases until the diesel fuel in used up and the recirculation conduit only contains plant oil.

As plant oil is introduced it passes through the primary circuit of the heat exchanger 10 which raises the temperature to, or above, 80 degrees C. The plant oil fuel passes into the fuel injector high pressure pump where it is pressurised and pumped to the injectors 28 - 31 for injection into the combustion chambers 35 to 38.

Any fuel leaking from the injectors is directed via conduit 21 to the first tank 2. Since the conduits between the injectors are prone to leakage, any air leaking in is directed to the first tank 2, thereby reducing the build-up of air. Similarly, air leaking into the injector pump or fuel lines connected thereto is directed via conduit 19 to the first tank 2, again preventing a build-up of air.

The engine continues to operate using pure plant oil fuel from tank 2 with the combustion process corresponding to that of a conventional diesel cycle.

In the situation where the ambient temperature drops it may be necessary to operate the engine using a blend of diesel and plant oil. In this arrangement the fuel select valve 6 may be a fuel blending valve arranged to blend a proportion of the first and second fuels in response to indications from the control unit which in turn receives input signals from the thermistor 32 indicating recirculation fuel temperature (and thereby viscosity).

At a time when the user wants to turn-off the engine, for example at the end of a journey, the fuel delivery system must be flushed of plant oil. The engine is therefore arranged to go through a 'flush cycle' before engine shut down to prevent viscous plant oil remaining in the engine as the engine cools. The flush cycle operates as follows:

Before engine shutdown the fuel supply control unit operates the 3-port recirculation/flush valve 14 so as to direct fuel via conduit 17 and T-pieces 18 and 20 to the first tank 2. Thus, the recirculating fuel (which is pure plant oil) is directed out of the recirculation loop and back to the plant oil fuel tank. The engine continues to operate as normal. After a time lag of approximately 5 seconds the control unit switches the fuel select valve 6 from plant fuel to diesel fuel. Diesel fuel then enters the heat exchanger and fuel pump and flushes the plant oil from these components and from the injectors and recirculation conduit 13. After a further preset time of 60 seconds the flush valve 14 is switched again thereby directing the fuel to the T-piece 9 and around the recirculation loop. An audible alarm is then given to the user after a further time period of 30 seconds indicating that the flush cycle is complete and that it is safe to shut-down the engine.

The flush cycle essentially comprises three stages : Stage one causes plant oil to move at a higher than normal rate in the entire fuel line (by directing fuel to the first tank) thus preventing contaminants from collecting. Stage two rapidly purges plant oil from the recirculating loop (i.e. heat exchanger, valves and injection pump) using the pure diesel fuel. Stage three is timed to allow the injectors to be purged of plant oil with pure diesel. This sequence enables the system to optimise the amount of diesel used for the flushing process.

The flush cycle is essential to prevent high viscosity fuel remaining in engine components as the fuel begins to cool and become more viscous. In another embodiment the control unit is provided with an alarm arrangement which indicates to the user when there has been a failure in the flush-cycle which would otherwise damage the engine.

For example, if the engine is left to cool down significantly while the injection pump is full of plant or plant oil, then, as discussed above, when the engine is restarted injection pump failure can occur. If the ignition is switched off without a flush sequence being completed then the system in accordance with this aspect of the invention will give an audio and/or visual indication to the user that they have not completed a flush sequence. In addition to this, the system will inform the user by audio and/or visual means when an attempt is made to restart the engine. This is by means of indicators arranged within the driver's cabin of the vehicle.

There is also the option, in another embodiment, to immobilise an un-flushed engine when the temperature falls below a danger threshold i.e. an injection pump damaging temperature (typically 20 degrees C, know as the critical mode). Once the system enters the critical mode the user is then required to manually purge the system of plant oil. The alarm system continues to indicate to the user that the engine has not flushed out the plant oil. If the user continues to attempt to operate the engine without flushing then the control unit can immobilise the engine completely until such a time as the engine has been flushed.

It will be recognised that the fuel delivery system can be conveniently be installed on an existing diesel engine installation with minimal alterations to the diesel engine itself other than the addition of the ancillary equipment described above, which does not alter the operation of the engine itself but only the fuel delivery system.

Once the system has been fitted to an engine installation, such as on a vehicle, the fitter is left with the task of bleeding the air from the new fuel line that runs to the new auxiliary fuel tank. Once the ignition has been switched on, during the next 5 seconds the fitter has the option of entering a 'prime mode'. Once the system is in this mode the engine is started and the flush valve 14 is opened to provide a path for the purged air back to the primary fuel tank. The fuel select valve is then set to run for 5 seconds on the first fuel tank 2 and then for 1 second on the auxiliary fuel tank 3. This results in a gradual bleeding of the air from the new fuel line at a rate that doesn't cause the engine to stall. Thus, air is bled from the newly installed fuel pipe by allowing the engine to tick over whilst the line is bled.

In a further embodiment the control unit and fuel delivery system is provided with a self test arrangement. In this embodiment the control unit is arranged to test for short circuits and to conduct open circuit testing of the fuel select valve, flush valve and the thermistor 32. In the event of a component failure the user is notified by an audio and/or visual indication in the vehicle. The test is performed when the ignition is switch on, at regular intervals during driving and when the flush sequence has been selected. The unit may also be arranged to add an additional time delay to the flush sequence for example should the controller determine that the flush valve has failed or is not operating correctly. Also, if the valve fails completely the control unit maybe arranged to prevent the fuel being switched to plant oil.This testing ensures that the system is able to function correctly (i.e. complete a flush cycle, run on the selected fuel, etc). Thus, the control unit will inform the user that the system is not doing what is expected thus, preventing a more serious problem such as a failed flush sequence (i.e. plant oil left in the injection pump) or unexpectedly running out of fuel (i.e. unknowingly running on diesel instead of plant oil).

## Claims

1. A fuel system (1) for a compression ignition internal combustion engine (34) which is adapted to use plant oil as the fuel, comprising:
a plant oil fuel tank (2) for storing plant oil fuel, a priming fuel tank (3) for storing a priming fuel, an injector pump (11) feeding an injector (28, 29, 30, 31) for a combustion chamber (35, 36, 37, 38) of the internal combustion engine, and means (10) for heating the plant oil fuel after leaving the plant oil fuel tank (2) and before being pumped to the injector (28, 29, 30, 31);
a fuel selection valve (6), a plant oil fuel feed from the plant oil fuel tank (2) arranged to feed plant oil fuel into a first inlet of the fuel selection valve (6), a priming fuel feed from the priming fuel tank (3) arranged to feed priming fuel into a second inlet of the fuel selection valve (6), the fuel selection valve (6) having an outlet which is arranged to selectively supply the plant oil fuel or the priming fuel to an inlet of the injector pump (11);
a re-circulating circuit (13) which is arranged to feed return excess plant oil fuel from a return outlet (12) of the injector pump (11) back to the inlet of the injector pump (11) without passing to the plant oil fuel tank (2);
a fuel heater (10) in the re-circulating circuit through which the plant oil fuel passes, and a sensor (32) in the re-circulating circuit which provides an output indicative of the viscosity of fuel in the re-circulating circuit so as to control operation of the fuel selection valve (6);
**characterised in that**:
the plant oil fuel feed and the priming fuel feed do not form part of the re-circulating circuit (13); the fuel selection valve outlet is arranged to feed the plant oil fuel or the priming fuel into the re-circulating circuit (13); and the arrangement is such that the priming fuel is also re-circulated around the re-circulating circuit (13), from the return outlet (12) of the injector pump (11) back to the inlet of the injector pump (11) without passing to the priming fuel tank (3), through the heater (10).

2. A system as claimed in claim 1, **characterised in that** the sensor (32) in the re-circulating circuit is a temperature sensor.

3. A system as claimed in claim 1 or 2, **characterised in that** the sensor (32) is disposed proximate the fuel injector pump (11).

4. A system as claimed in claim 3, **characterised in that** the sensor (32) is disposed adjacent the return outlet (12) of the fuel injector pump (11).

5. A system as claimed in any preceding claim, **characterised in that** the fuel selection valve (6) is arranged to feed selectively into the re-circulating circuit (13): (a) only fuel from the plant oil fuel tank (2) ; (b) only fuel from the priming fuel tank (3); and (c) a blend of fuel from the plant oil tank (2) and the priming fuel tank (3).

6. A system as claimed in any preceding claim, **characterised in that** the heater (10) in the re-circulating circuit (13) is arranged upstream of the inlet of the injector pump (11), after the point where the plant oil fuel or the priming fuel are fed into the re-circulating circuit (13) from the outlet of the fuel selection valve (6).

7. A system as claimed in any preceding claim, **characterised in that** there is a bleed off line (21) for excess fuel from the injector (28, 29, 30, 31), the bleed off line feeding excess fuel to the plant oil fuel tank (2).

8. A system as claimed in any preceding claim, **characterised in that** there is secondary return outlet (23) of the injector pump (11) which is arranged to feed leaked fuel and air to the plant oil fuel tank (2).

9. A compression ignition internal combustion engine (34) provided with a fuel system (1) as claimed in any preceding claim.

## Patentansprüche

1. Kraftstoffsystem (1) für einen Selbstzünder-Verbrennungsmotor (34), der dafür eingerichtet ist, Pflanzenöl als Kraftstoff zu verwenden, das aufweist:
einen Pflanzenölkraftstofftank (2) zum Speichern von Pflanzenölkraftstoff, einen Starterkraftstofftank (3) zum Speichern eines Starterkraftstoffs, eine Einspritzpumpe (11), die eine Einspritzeinrichtung (28, 29, 30, 31) für eine Verbrennungskammer (35, 36, 37, 38) des Verbrennungsmotors speist, und Mittel (10) zum Erwärmen des Pflanzenölkraftstoffs, nachdem dieser den Pflanzenölkraftstofftank (2) verlässt und bevor dieser in die Einspritzeinrichtung (28, 29, 30, 31) gepumpt wird;
ein Kraftstoffauswahlventil (6), eine Pflanzenölkraftstoffeinspeisung von dem Pflanzenölkraftstofftank (2), die so angeordnet ist, dass sie Pflanzenölkraftstoff in einen ersten Einlass des Kraftstoffauswahlventils (6) einspeist, eine Starterkraftstoffeinspeisung von dem Starterkraftstofftank (3), die so angeordnet ist, dass sie Starterkraftstoff in einen zweiten Einlass des Kraftstoffauswahlventils (6) einspeist, wobei das Kraftstoffauswahlventil (6) einen Auslass aufweist, welcher dafür eingerichtet ist, selektiv den Pflanzenölkraftstoff oder den Starterkraftstoff an einen Einlass der Einspritzpumpe (11) bereitzustellen;
einen Rezirkulationskreislauf (13), der dafür eingerichtet ist, überschüssigen Planzenölkraftstoff von einem Rücklauf bzw. Rückkehrauslass (12) der Einspritzpumpe (11) zurück zum Einlass der Einspritzpumpe (11) zurückzuführen, ohne den Pflanzenölkraftstofftank (2) zu passieren;
einen Kraftstoffheizer (10) in dem Rezirkulationskreislauf, durch welchen der Pflanzenölkraftstoff passiert, und einen Sensor (32) in dem Rezirkulationskreislauf, der eine Ausgabe bereitstellt, die bezüglich der Viskosität von Kraftstoff in dem Rezirkulationskreislauf kennzeichnend ist, um einen Betrieb des Kraftstoffauswahlventils (6) zu steuern;
**dadurch gekennzeichnet, dass**:
Die Pflanzenölkraftstoffeinspeisung und die Starterkraftstoffeinspeisung keinen Teil des Rezirkulationskreislaufs (13) bilden; wobei der Kraftstoffauswahlventilauslass dafür eingerichtet ist, den Pflanzenölkraftstoff oder den Starterkraftstoff in den Rezirkulationskreislauf (13) einzuspeisen; und die Anordung derart ist, dass der Starterkraftstoff auch um den Rezirkulationskreislauf (13) herum rezirkuliert wird, von dem Rückkehrauslass (12) der Einspritzpumpe (11) zurück zum Einlass der Einspritzpumpe (11), ohne den Starterkraftstofftank (3) zu passieren, durch den Heizer (10).

2. System nach Anspruch 1, **dadurch gekennzeichnet, dass** der Sensor (32) in dem Rezirkulationskreislauf ein Temperatursensor ist.

3. System nach Anspruch 1 oder 2, **dadurch gekennzeichnet, dass** der Sensor (32) proximal der Kraftstoffeinspritzpumpe (11) angeordnet ist.

4. System nach Anspruch 3, **dadurch gekennzeichnet, dass** der Sensor (32) neben dem Rückkehrauslass (12) der Kraftstoffeinspritzpumpe (11) angeordnet ist.

5. System nach einem der vorstehenden Ansprüche, **dadurch gekennzeichnet, dass** das Kraftstoffauswahlventil (6) dafür eingerichtet ist, selektiv in den Rezirkulationskreislauf (13) einzuspeisen:
(a) nur Kraftstoff von dem Pflanzenölkraftstofftank (2);
(b) nur Kraftstoff von dem Starterkraftstofftank (3); und
(c) eine Mischung von Kraftstoff aus den Pflanzenöltank (2) und dem Starterkraftstofftank (3).

6. System nach einem der vorstehenden Ansprüche, **dadurch gekennzeichnet, dass** der Heizer (10) in dem Rezirkulationskreislauf (13) stromaufwärts des Einlasses der Einspritzpumpe (11) angeordnet ist, nach dem Punkt, an dem der Pflanzenölkraftstoff oder der Starterkraftstoff in den Rezirkulationskreislauf (13) von dem Auslass des Kraftstoffauswahlventils (6) eingespeist wird.

7. System nach einem der vorstehenden Ansprüche, **dadurch gekennzeichnet, dass** eine Überlaufleitung (21) für überschüssigen Kraftstoff aus der Einspritzeinrichtung (28, 29, 30, 31) existiert, wobei die Überlaufleitung überschüssigen Kraftstoff in den Pflanzenölkraftstofftank (2) einspeist.

8. System nach einem der vorstehenden Ansprüche, **dadurch gekennzeichnet, dass** ein zweiter Rückkehrauslass (23) der Einspritzpumpe (11) existiert, der dafür eingerichtet ist, ausgetretenen ausgelaufenen Kraftstoff und Luft in den Pflanzenölkraftstofftank (2) einzuspeisen.

9. Selbstzünder-Verbrennungsmotor (34), der mit einem Kraftstoffsystem (1) nach einem der vorstehenden Ansprüche versehen ist.

## Revendications

1. Système de carburant (1) pour un moteur à combustion interne à allumage par compression (34) qui est adapté pour utiliser de l'huile végétale comme carburant, comportant : un réservoir de carburant d'huile végétale (2) destiné à contenir ou stocker du carburant d'huile végétale, un réservoir de carburant d'amorçage (3) destiné à contenir un carburant d'amorçage, une pompe d'injection (11) alimentant un injecteur (28, 29, 30, 31) pour une chambre de combustion (35, 36, 37, 38) du moteur à combustion interne, et des moyens (10) pour chauffer le carburant d'huile végétale après qu'il ait quitté le réservoir de carburant d'huile végétale (2) et avant qu'il soit pompé vers l'injecteur (28, 29, 30, 31) ;
une soupape de sélection de carburant (6), une alimentation en carburant d'huile végétale provenant du réservoir de carburant d'huile végétale (2) conçue pour transférer du carburant d'huile végétale dans une première entrée de la soupape de sélection de carburant (6), une alimentation en carburant d'amorçage provenant du réservoir de carburant d'amorçage (3) conçue pour transférer du carburant d'amorçage dans une seconde entrée de la soupape de sélection de carburant (6), la soupape de sélection de carburant (6) ayant une sortie qui est conçue pour délivrer sélectivement le carburant d'huile végétale ou le carburant d'amorçage à une entrée de la pompe d'injection (11) ;
un circuit de recirculation (13) qui est conçu pour renvoyer du carburant d'huile végétale de retour en excès depuis une sortie de retour (12) de la pompe d'injection (11) vers l'entrée de la pompe d'injection (11) sans passer par le réservoir de carburant d'huile végétale (2) ;
un dispositif de chauffage de carburant (10) dans le circuit de recirculation à travers lequel le carburant d'huile végétale passe, et un capteur (32) dans le circuit de recirculation qui délivre une sortie représentative de la viscosité du carburant dans le circuit de recirculation de manière à commander le fonctionnement de la soupape de sélection de carburant (6) ;
**caractérisé en ce que** :
l'alimentation en carburant d'huile végétale et l'alimentation en carburant d'amorçage ne forment pas une partie du circuit de recirculation (13) ; la sortie de soupape de sélection de carburant est conçue pour transférer ou alimenter le carburant d'huile végétale ou le carburant d'amorçage dans le circuit de recirculation (13) ; et l'agencement est tel que le carburant d'amorçage est également remis en circulation ou recirculé autour du circuit de recirculation (13), depuis la sortie de retour (12) de la pompe d'injection (11) au retour à l'entrée de la pompe d'injection (11) sans passer par le réservoir de carburant d'amorçage (3), à travers le dispositif de chauffage (10).

2. Système selon la revendication 1, **caractérisé ce que** le capteur (32) dans le circuit de recirculation est un capteur de température.

3. Système selon la revendication 1 ou 2, **caractérisé en ce que** le capteur (32) est disposé à proximité de la pompe d'injection de carburant (11).

4. Système selon la revendication 3, **caractérisé ce que** le capteur (32) est disposé adjacent à la sortie de retour (12) de la pompe d'injection de carburant (11).

5. Système selon l'une quelconque des revendications précédentes, **caractérisé en ce que** la soupape de sélection de carburant (6) est conçue pour transférer sélectivement dans le circuit de recirculation (13) : (a) uniquement du carburant provenant du réservoir de carburant d'huile végétale (2) ; (b) uniquement du carburant provenant du réservoir de carburant d'amorçage (3) ; et (c) un mélange de carburant provenant du réservoir d'huile végétale (2) et du réservoir de carburant d'amorçage (3).

6. Système selon l'une quelconque des revendications précédentes, **caractérisé en ce que** le dispositif de chauffage (10) dans le circuit de recirculation (13) est agencé en amont de l'entrée de la pompe d'injection (11), après le point où le carburant d'huile végétale ou le carburant d'amorçage sont transférés dans le circuit de recirculation (13) à partir de la sortie de la soupape de sélection de carburant (6).

7. Système selon l'une quelconque des revendications précédentes, **caractérisé en ce qu'**il existe une ligne de purge (21) pour du carburant en excès provenant de l'injecteur (28, 29, 30, 31), la ligne de purge transférant le carburant en excès vers le réservoir de carburant d'huile végétale (2).

8. Système selon l'une quelconque des revendications précédentes, **caractérisé en ce qu'**il existe une sortie de retour secondaire (23) de la pompe d'injection (11) qui est conçue pour transférer du carburant ayant fui et de l'air vers le réservoir de carburant d'huile végétale (2).

9. Moteur à combustion interne à allumage par compression (34) muni d'un système d'alimentation en carburant (1) tel que revendiqué dans l'une quelconque des revendications précédentes.
